# EUROPÄISCHE PATENTSCHRIFT

(11) **EP 1 206 774 B1**
(45) Veröffentlichungstag und Bekanntmachung des Hinweises auf die Patenterteilung: **03.12.2003**
(21) Anmeldenummer: 00954300.0
(22) Anmeldetag: 05.07.2000
(51) Int. Cl.: G11B 33/06, G11B 23/40, B42D 15/02, G06K 19/08

(54) **PLATTENFÖRMIGER OPTISCHER DATENTRÄGER**
OPTICAL DATA CARRIER IN THE FORM OF A DISK
SUPPORT DE DONNEES OPTIQUE SOUS FORME DE DISQUE

(30) Priorität: 10.07.1999 DE 19932340; 29.09.1999 DE 29917105 U
(43) Veröffentlichungstag der Anmeldung: 22.05.2002
(73) Patentinhaber: Schoppe, Karl-Heinz, 52074 Aachen (DE)
(72) Erfinder: Schoppe, Karl-Heinz, 52074 Aachen (DE)
(74) Vertreter: Draudt, Axel Hermann Christian, Dipl.-Ing.
(86) Internationale Anmeldenummer: DE0002135
(87) Internationale Veröffentlichungsnummer: WO01004905

(56) Entgegenhaltungen:
- EP-A- 0 723 266
- EP-A- 1 002 662
- WO-A-00/62249
- DE-U- 29 709 648
- GB-A- 2 059 666
- US-A- 4 812 633
- DVD Specifications for Read-Only Disc Part 1 Physical Specifications Version 1.0 August 1996 ,PH-0,PH-2,PH-19-PH-23

## Beschreibung

Die Erfindung betrifft einen plattenförmigen optischen Datenträger mit einer für Strahlung durchlässigen Schicht und einer Informationsaufzeichnungsschicht, auf deren Oberfläche Speicherzonen für Digitalinformationen angeordnet sind, wobei der Datenträger eine durchgehende Öffnung für ein Aufnahmeelement einer Auslese- und/oder Einschreibevorrichtung aufweist.

Derartige Datenträger sind unter den Bezeichnungen CD (Compact Disc), CD ROM (Compact Disc Read Only Memory) und DVD (Digital Versatile Disc) allgemein bekannt. Neben ausschließlich abspielbaren Ausführungen gibt es auch solche, z. B. CD-R, auf denen sich Informationen mit speziellen Einschreibevorrichtungen vom Nutzer individuell abspeichem lassen, evtl. sogar in mehrfach überschreibbarer Ausführung CD-RW (rewritable).

Die bekannten Datenträger werden mit ihrer zentrischen Öffnung von einem angepaßten Aufnahmeelement einer Auslese- und/oder Einschreibevorrichtung aufgenommen und in Rotation versetzt, damit mittels eines Laserstrahlung emittierenden, radial beweglichen Lese- und/oder Schreibkopfs ein Datenstrom von oder zu dem Datenträger realisiert werden kann.

Zum allgemein bekannten Stand der Technik zählen auch sogenannte CD-ROM-Karten, die die Dicke einer herkömmlichen CD-ROM bzw. DVD besitzen, ansonsten jedoch meist nicht das standardisierte Format einer Scheckkarte aufweisen. Der Speicherbereich ist bei derartigen Datenträgern auf einen Kreisring beschränkt, der maximal in den ungefähr rechteckförmigen Datenträger einbeschreibbar ist. Nachteilig bei diesen CD-ROM-Karten ist ihre im Vergleich zu gewöhnlichen Scheckkarten mit Magnetstreifen oder elektronischen Chipelementen sehr viel größere Dicke. Diese führt zu einer stark verminderten Elastizität, was insbesondere bei einer Aufbewahrung der CD-ROM-Karte in einem Portemonnaie dessen Tragekomfort vermindert. Auch reicht das Raumangebot üblicher Brieftaschen oder Portemonnaies oftmals nicht aus, wenn eine Mehrzahl von CD-ROM-Karten darin untergebracht werden soll. Auch ist das für derartige CD-ROM-Karten verwendete Polycarbonat nachteilig bezüglich der für eine Karte typischen Handhabung im rauhen Alltagsbetrieb, da es aufgrund der Sprödigkeit des Materials in Verbindung mit der geringen Elastizität schnell zu Brüchen bzw. Rissen im Material kommen kann.

Aus der DE 296 16 619 U 1 ist eine sogenannte multimediale Visitenkarte bekannt, die in ihrer Breite und Länge an die Abmessungen standardmäßiger Papiervisitenkarten angelehnt ist. Bei dieser vorbekannten Visitenkarte handelt es sich jedoch um eine solche aus dem Material einer CD-ROM, wobei auch die Dicke der Visitenkarte derjenigen einer normalen CD-ROM entspricht.

Da ein derartiges sogenanntes unstandardisiertes Format einer CD bzw. CD-ROM nicht in allen gängigen Abspielgeräten benutzbar ist, wird in der DE 297 04 140 U1 eine CD-Abspielhilfe, insbesondere für die multimediale Visitenkarte, wie sie in der DE 296 16 619 U1 beschrieben wird, offenbart. Der Körper der CD-Abspielhilfe entspricht in seinen Außenabmessungen exakt den Standardmaßen einer CD bzw. CD-ROM und besitzt einen im Querschnitt rechteckförmigen durchgängigen Innenausschnitt, der der Form der Außengeometrie der multimedialen Visitenkarte entspricht. Eine Fixierung der Visitenkarte in der Abspielhilfe erfolgt dadurch, daß die Stirnseiten der Visitenkarten konvex geformt sind und die Stirnseiten der Abspielhilfe im Bereich des Innenausschnitts daran angepaßt konkav. Aufgrund der Elastizität der Kunststoffmaterialien wie sie sowohl für die Visitenkarte als auch für die Abspielhilfe verwendet werden, erlaubt mit einem gewissen Kraftaufwand ein Einsetzen der Visitenkarte in den Ausschnitt, wobei aufgrund des Formschlusses im eingesetzten Zustand eine sichere und definierte Verbindung der beiden Bauteile gewährleistet ist. Um den Vorgang des Einsetzens bzw. Auslösens der Visitenkarte aus der Abspielhilfe zu erleichtern, sind in den Eckbereichen des Innenausschnitts weiternde Rundungen vorhanden.

Des weiteren ist es wünschenswert, die Variabilität derartiger Datenträger im Hinblick auf verschiedene Speicherprinzipien und die damit in Verbindung stehenden Auslese- und Beschreibetechniken zu erhöhen.

Aus der EP 0 723 266 A2 ist ein optisch aus lesbarer digitaler Dünnfilm-Datenträger bekannt, der aus einem folienartigen Material hergestellt ist und zu Lager- und Transportzwecken auf ein Trägerblatt aufgeklebt ist. Zum Auslesen des Datenträgers wird dieser auf einen für den Abtast-Laserstrahl einer Abspieleinrichtung durchlässigen Träger aufgelegt. Der Strahlengang des Lasers geht durch den Träger hindurch, wo bereits die vollständige oder zumindest teilweise Fokussierung des Strahls stattfindet.

Als besonders nachteilig ist es bei diesem Dünnfilm-Datenträger anzusehen, daß der Laserstrahl zwei Grenzschichten zwischen dem für Strahlung durchlässigen Träger und dem eigentlichen Datenträger durchdringen muß. Befinden sich in diesem Bereich des Strahlengangs, der in unmittelbarer Nähe bzw. vergleichsweise geringer Nähe des Fokuspunkts des Lasers angeordnet ist, Schmutzpartikel oder Lufteinschlüsse, so führen diese unweigerlich zu Beeinträchtigungen des Auslesevorgangs.

Die GB 2 059 666 A beschreibt eine audio-visuelle Karte, die ein kreisringförmiges Speicherteil aufweist, das mit einer wendelförmigen Nut versehen ist. Die Nut wird von dem rotierenden Stift einer Ausleseeinrichtung abgetastet, wobei auf rein mechanische Weise eine Umsetzung in elektrische Signale erfolgt. Ein optisches Ausleseprinzip ist bei diesem Datenträger nicht verwirklicht.

Die DE 297 09 648 U1 offenbart eine Visitenkarte, die aus einem Ausschnitt einer CD hergestellt ist und beispielsweise die Abmessungen einer Scheckkarte besitzt. Auch die Unterbringung eines Chips auf einer Seite der Visitenkarte ist vorgesehen. Aufgrund der Abmessungen der Karte sowie der Positionierung des Speicherchips ist eine Kompatibilität der bekannten Visitenkarte mit standardisierten Kartenformaten, wie beispielsweise Magnetstreifenkarten, Smartcards und Chipkarten, nicht gegeben.

Der Erfindung liegt die Aufgabe zugrunde, einen Datenträger bereitzustellen, dessen Handhabung und Aufbewahrung auch gesteigerten Komfortansprüchen gerecht wird und der sich durch eine Variabilität bezüglich der zum Einsatz gelangenden Speicherprinzipien bei der Datenspeicherung auszeichnet.

Ausgehend von einem Datenträger der eingangs beschriebenen Art, wird diese Aufgabe erfindungsgemäß durch die Merkmale des Anspruchs 1 gelöst.

Ein derartiger Datenträger zeichnet sich aufgrund der verminderten Dicke durch seine große Flexibilität und daher eine sehr angenehme Handhabung aus. Auch bei einer Unterbringung einer Vielzahl derartiger Datenträger ergeben sich nicht die Platzprobleme, wie sie bei herkömmlichen CD-ROM-Karten auftreten. Die Trägerschicht muß lediglich so dick bemessen sein, daß der Datenträger ohne die Gefahr einer Beschädigung gehandhabt und transportiert werden kann.

Sofern der Datenträger eine der Informationsaufzeichnungsschicht vorgelagerte, für Strahlung durchlässige Schicht aufweist, kann diese vollständig die Funktion der die Formstabilität des Datenträgers gewährleistenden Trägerschicht übernehmen, so daß die Dicke der für Strahlung durchlässigen Schicht im wesentlichen die minimale Dicke des Datenträgers bestimmt, da die Dicke der Informationsaufzeichnungsschicht extrem gering ist. Mit der erfindungsgemäß vorgeschlagenen Dickenreduzierung ist zwar der Nachteil verbunden, daß der Datenträger ohne weitere Maßnahmen in den derzeit gebräuchlichen Abspielgeräten für CD oder DVD nicht auslesbar ist. Die Erfindung bietet jedoch den enormen Vorteil der Schaffung eines optischen Datenträgers, der hinsichtlich seiner sämtlichen Abmessungen, insbesondere der Dicke, mit Datenträgern anderer Speicherprinzipien (Magnetstreifenkarte, Chipkarte, ...) kompatibel und somit "multimedial" einsetzbar ist.

Vorteilhafterweise entspricht er hinsichtlich seiner Dicke, Länge und Breite herkömmlichen Chipkarten bzw. Magnetstreifenkarten. Die Dicke sollte entsprechend der derzeitig gültigen Standards ungefähr 0,8 mm betragen. Somit ist durch die Erfindung erstmals ein optischer Datenträger vorgestellt, der hinsichtlich seiner Abmessungen und Verwendbarkeit voll kompatibel zu existierenden Formaten, wie Kreditkarte, Scheckkarte, Chipkarte, und "Smart card" ist.

Eine besonders vorteilhafte Ausgestaltung der Erfindung besteht darin, daß die Öffnung exzentrisch angeordnet ist und der Datenträger mit einem über Kontaktflächen auslesbaren und/oder beschreibbaren elektronischen Chipelement versehen ist.

Neben der Funktion eines optischen Datenträgers besitzt der erfindungsgemäße Datenträger somit die weitere sehr vorteilhafte Eigenschaft, auch die Funktion einer Chipkarte zu erfüllen. Der Raumbedarf für das Chipelement, dessen Anordnung auf den bekannten Chipkarten normiert ist, wird dabei durch die exzentrische Anordnung der Öffnung für das Aufnahmeelement geschaffen. Bei einer Anordnung des Mittelpunkts der Öffnung auf der längeren Mittellinie eines beispielsweise die Datenträgerform beschreibenden Rechtecks wird der zur Verfügung stehende Speicherbereich nicht verkleinert, da sich die Größe des einbeschreibbaren Kreisrings gegenüber einer zentrischen Anordnung der Öffnung nicht ändert. Durch die exzentrische Anordnung der Öffnung wird die Sicherheit bei den Anwendung erhöht, da es für jedermann offensichtlich wird, die Karte nicht ohne Adapter zu verwenden. Anderenfalls ist die Karte (auch bei zentrischer Öffnung) nicht in Slotlauffwerken und nicht in den üblichen Schubladeneinzügen von PC's zu verwenden. Diese Schwäche besitzen jedoch auch die herkömmlichen CD-Cards.

Vorteilhafterweise besteht die strahlungsdurchlässige Schicht aus Polycarbonat.

Die Erfindung weiter ausgestaltend, ist vorgesehen, daß das Chipelement auf der der strahlungsdurchlässigen Schicht abgewandten Seite des Datenträgers angeordnet ist.

Um die Funktionalität und Kompatibilität des Datenträgers im Hinblick auf unterschiedliche Speicherprinzipien weiter zu erhöhen, wird vorgeschlagen, den Datenträger mit einem Magnetstreifen zu versehen. Sinnvollerweise sind sowohl der Magnetstreifen und das Chipelement auf der der strahlungsdurchlässigen Schicht abgewandten Seite angeordnet. In diesem Fall handelt es sich um einen regelrecht multimedialen Datenträger.

Um auch höheren Ansprüchen an die Ästhetik des Datenträgers gerecht zu werden bzw. den Datenträger mit besonderen Sicherheitsmerkmalen zu versehen, sieht eine Weiterbildung der Erfindung vor, daß der Datenträger auf der der durchlässigen Schicht abgewandten Seite mit einer Beschichtung, beispielsweise in Form eines "Wasserzeichens" bzw. Hologramms, versehen ist.

Eine Weiterbildung des erfindungsgemäßen Datenträgers besteht darin, daß er aus einem kreisringförmigen und die Öffnung aufweisenden Speicherteil, einem die Dicke, die Länge und die Breite eines standardisierten Datenträgers vom Chipkartentyp aufweisenden Trägerteil und einem über Kontaktflächen auslesbaren und/oder beschreibbaren Chipelement besteht, wobei das Speicherteil und das Chipelement derart in das Trägerteil einsetzbar sind, daß sich im wesentlichen ebene Oberflächen des Datenträgers ergeben.

Zum einen läßt sich ein kreisringförmiges Speicherteil einfacher herstellen als ein anders geformtes und zum anderen lassen sich für beide Teile unterschiedliche Materialien verwenden, um den unterschiedlichen Anforderungen gerecht zu werden. So besteht das Speicherteil vorzugsweise aus einem eine hohe Oberflächenhärte aufweisenden Polycarbonat, wohingegen für das Trägerteil sinnvollerweise ein flexibler, wenig bruch-, riß- oder ermüdungsanfälliger Werkstoff, beispielsweise aus einem Kunststoff oder aus Karton, Verwendung finden sollte.

Außerdem wird vorgeschlagen, daß das Speicherteil eine Dicke zwischen 0,5 mm und 0,6 mm aufweist und einen Außendurchmesser besitzt, der im wesentlichen der Breite eines standardisierten Datenträgers vom Chipkarten-Typ entspricht, um eine möglichst große Speicherkapazität des Datenträgers zu erzielen.

Bei einer bevorzugten Ausführungsform des Datenträgers besteht das Trägerteil zumindest teilweise aus Hartkarton. Dies bietet den Vorteil, daß das Trägerteil vom Verwender individuell mit Hilfe eines Laserdrucks bedruckt werden kann, um beispielsweise als Visitenkarte verwendet zu werden. Nach dem Bedrucken kann das Speicherteil sowie eventuell das Chipelement in die daran angepaßten Ausnehmungen in dem Trägerteil eingesetzt und beispielsweise mittels Verkleben fixiert werden. Derartige Visitenkarten bieten gegenüber herkömmlichen den Vorteil, daß darauf zum einen unter Beibehaltung der Flexibilität üblicher Chipkarten wesentlich mehr Informationen speicherbar sind und zum anderen diese Informationen direkt beim Empfänger der Visitenkarte in dessen Datenverarbeitungsanlage einlesbar sind, so daß ein separates und zeitaufwendiges manuelles Eingeben dieser Daten entfällt.

Die Erfindung schlägt des weiteren einen Adapter zur Aufnahme eines Datenträgers vor, der mit einem Aufnahmebereich versehen ist, dessen Innenabmessungen geringfügig größer als die Außenabmessungen des aufzunehmenden Datenträgers sind und der mit einer zentralen Öffnung versehen ist, die koaxial zu der Öffnung in dem Datenträger in dessen aufgenommener Position ist, wobei die Summe der Dicke des Datenträgers und der Dicke des Adapters in dem Aufnahmebereich der Dicke eines standardisierten Datenträgers vom DVD-Typ entspricht und die aus Adapter und Datenträger zu bildende Einheit um die Mittelachse der Öffnung unwuchtfrei rotierbar ist.

Hiermit wird auf einfache Weise die Abspielbarkeit des erfindungsgemäßen Datenträgers auch bei hohen Drehzahlen und unabhängig von der Bauart der Auslese- und Einschreibevorrichtung sichergestellt. Der Adapter wird üblicherweise vom Benutzer nicht mitgeführt, sondern verbleibt bei der Auslese- bzw. Einschreibevorrichtung. Für eine Vielzahl gleichartiger Datenträger ist lediglich ein einziger Adapter erforderlich. Der Adapter kann z.B. einstückig beispielsweise im Spritzgußverfahren hergestellt oder aus zwei Scheiben zusammengesetzt sein.

Die Erfindung wird nachfolgend anhand zweier Ausführungsbeispiele von Datenträgern, die in der Zeichnung schematisch dargestellt sind, näher erläutert. Es zeigt:
- Fig. 1: einen Datenträger mit exzentrisch angeordneter Öffnung und einem Chipelement sowie einem Magnetstreifen;
- Fig. 2: einen Adapter zur Aufnahme des Datenträgers gemäß Fig. 1;
- Fig. 3: einen Datenträger mit zentrisch angeordneter Öffnung;
- Fig. 4: einen Adapter zur Aufnahme des Datenträgers gemäß Fig. 3;
- Fig. 5: ein Trägerteil;
- Fig. 6: ein Speicherteil und
- Fig. 7: ein Chipelement.

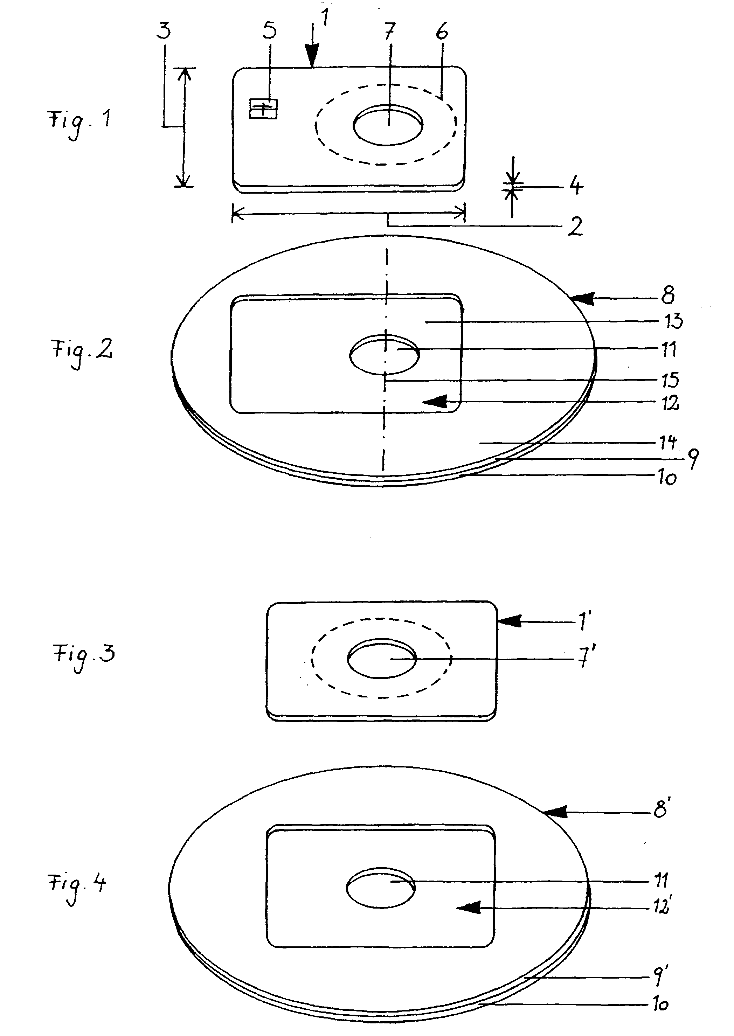

Ein in Fig. 1 dargestellter Datenträger 1 besitzt das in etwa rechteckförmige Format einer standardmäßigen Chipkarte, d.h. eine Länge 2 von ca. 85 mm, eine Breite 3 von ca. 54 mm und eine Dicke 4 von ca. 0,8 mm. Der Datenträger 1 ist an einer hierfür genormten Stelle mit einem elektronischen Chipelement 5 zum Auslesen und Einschreiben von Digitalinformation versehen.

Der Datenträger 1 besitzt des weiteren auf der in Fig. 1 nicht sichtbaren Seite eine für Strahlung durchlässige Schicht mit einer Dicke von ca. 0,5 mm sowie eine von der unteren Oberfläche des Datenträgers her gesehen darunter angeordneten Informationsaufzeichnungsschicht, auf deren Oberfläche Speicherzonen für Digitalinformationen angeordnet sind. Diese Informationsaufzeichnungsschicht erstreckt sich über einen Kreisringbereich, der durch die gestrichelte Linie 6 begrenzt wird.

Außerdem weist der Datenträger 1 eine in bezug auf das Rechteck exzentrisch, d.h. außerhalb des Schwerpunkts, angeordnete Öffnung 7 auf, die mit einem nicht dargestellten Aufnahmeelement einer Auslese- und/oder Einschreibevorrichtung zusammenwirkt und daher in Abmessungen und Gestalt normiert ist. Aufgrund der exzentrischen Öffnung wird die Gefahr verringert, daß der Datenträger 1 ohne zugehörigen Adapter abgespielt wird.

Fig. 2 zeigt einen Adapter 8, der die Grundform eines herkömmlichen Datenträgers vom DVD-Typ besitzt und eine Dicke von 1,2 mm aufweist. Der Adapter 8 ist aus zwei zylinderförmigen Kreisscheiben 9 und 10 zusammengesetzt, von denen die obere eine Dicke von ca. 0,8 mm und die untere von ca. 0,4 mm besitzt. Im Bereich ihrer Kontaktflächen sind die beiden Kreisscheiben 9 und 10 miteinander verklebt.

Die in Fig. 2 untere Kreisscheibe 10 weist eine zentrische durchgehende Öffnung 11 auf, die in ihrem Durchmesser mit dem der Öffnung 7 in dem Datenträger 1 übereinstimmt. Die obere Kreisscheibe 9 ist mit einem rechteckförmigen Ausschnitt versehen, der in Verbindung mit der eine Begrenzung bildenden Stirnfläche 13 der unteren Kreisscheibe 10 einen Aufnahmebereich 12 definiert. In diesen Aufnahmebereich 12 läßt sich der Datenträger 1 gemäß Fig. 1 derart einlegen, daß zum einen die Öffnung 7 im Datenträger 1 mit der Öffnung 11 in dem Adapter 8 fluchtet und zum anderen die von der durchlässigen Schicht des Datenträgers 1 gebildete Oberfläche mit der Stirnseite 14 der oberen Kreisscheibe 9 bündig abschließt. Auf diese Weise entsteht eine aus Datenträger 1 und Adapter 8 gebildete Einheit, die sich um die Mittelachse 15 der Öffnungen 7 und 11 im zusammengefügten Zustand von Datenträger 1 und Adapter 8 unwuchtfrei mit hohen Drehzahlen rotieren läßt. Der Datenträger 1 läßt sich daher in handelsüblichen Auslese- bzw. Einschreibevorrichtungen verwenden.

Fig. 3 zeigt einen alternativen Datenträger 1', der wie der Datenträger 1 gemäß Fig. 1 Längen-, Breiten- und Dickenmaße besitzt, die mit denen einer herkömmlichen Chip- bzw. Magnetstreifenkarte übereinstimmen. Um die Abspielbarkeit eines derartigen Datenträgers 1' unabhängig von der Bauweise der Aufnahmeeinrichtungen der Auslese- bzw. Einschreibevorrichtungen zu gewährleisten, wird ein in Fig. 4 abgebildeter Adapter 8' verwendet, der wie der Adapter 8 gemäß Fig. 2 aus zwei miteinander verklebten Kreisscheiben 9' und 10 besteht. Während die untere Kreisscheibe 10 mit der des Adapters 8 identisch und mit einer zentrischen Öffnung 11' versehen ist, weist die obere Kreisscheibe 9' einen zentrisch angeordneten rechteckförmigen Ausschnitt auf. Hierdurch wird ein Aufnahmebereich 12' definiert, der es erlaubt, den Datenträger 1' derart darin einzulegen, daß dieser mit seiner Öffnung 7' mit der Öffnung 11 fluchtet und in herkömmlichen Auslese- und/oder Einschreibevorrichtungen einsetzbar ist.

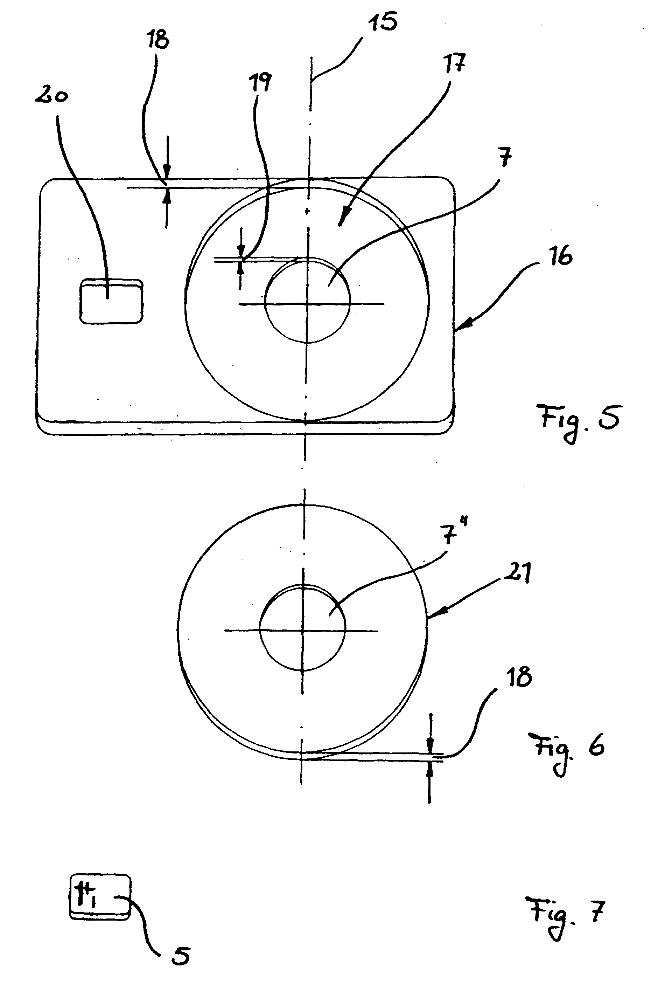

Den Figuren 5 bis 7 läßt sich der Aufbau des in Fig. 1 dargestellten Datenträgers 1 entnehmen. Dieser besteht aus einem aus Hartkarton hergestellten Trägerteil 16, das hinsichtlich seiner Länge, Breite und Dicke den jeweiligen Maßen des Datenträgers 1 entspricht. Das Trägerteil 16 weist eine zylinderförmige Ausnehmung 17 auf, deren Mittelachse 15 auf der in Längsrichtung des Trägerteils 16 verlaufenden Symmetrieebene liegt und in bezug auf die in Querrichtung, d.h. senkrecht hierzu verlaufende Symmetrieebene, versetzt angeordnet ist. Die Ausnehmung 17 besitzt eine Tiefe 18 von ca. 0,58 mm, woraus eine Restdicke 19 des Trägerteils 16 im Bereich der Ausnehmung 17 von ca. 0,22 mm resultiert. Koaxial zu der Ausnehmung 17 ist die durchgehende Öffnung 7 angeordnet.

Des weiteren ist das Trägerteil 16 mit einer ungefähr rechteckförmigen durchgängigen Aussparung 20 versehen, in die sich das Chipelement 5 gemäß Fig. 7 einsetzen läßt.

Das in Fig. 6 gezeigte Speicherteil 21 weist denselben Außendurchmesser und dieselbe Dicke 18 von 0,58 mm wie die Ausnehmung 17 in dem Trägerteil 16 auf. Das Speicherteil 21 weist eine für Strahlung durchlässige Schicht und eine im Anschluß daran angeordnete Informationsaufzeichnungsschicht auf und besteht im wesentlichen aus Polycarbonat. Das Speicherteil gemäß Fig. 6 wird in die Ausnehmung des Trägerteils 16 gemäß Fig. 5 eingesetzt, um einen Datenträger 1, wie in Fig. 1 gezeigt, zu erhalten. So sind die Öffnungen 7" des Speicherteils 21 und 7 des Trägerteils 16 deckungsgleich übereinander. Die Oberfläche des Speicherteils 21 im eingeklebten Zustand schließt bündig mit der Oberfläche des Trägerteils 16 ab.

## Patentansprüche

1. Plattenförmiger optischer Datenträger (1,1') in etwa rechteckigem Format, der ein Speicherteil (21) mit einer für Strahlung durchlässigen Schicht und eine im Anschluß daran angeordnete Informationsaufzeichnungsschicht hat, auf deren Oberfläche Speicherzonen für Digitalinformationen angeordnet sind, wobei der Datenträger eine durchgehende Öffnung (7,7',7") für ein Aufnahmeelement einer Auslese- und/oder Einschreibevorrichtung aufweist, **dadurch gekennzeichnet, daß** die Dicke (4) des Datenträgers gleich der Dicke von ca. 0,8 mm einer standardisierten Chip- oder Magnetstreifenkarte ist und daß das Spei cherteil (21) eine Dicke (18) zwischen 0,5 mm und 0,75 mm aufweist.

2. Datenträger nach Anspruch 1, **dadurch gekennzeichnet, daß** er die Länge (2) und die Breite (3) eines standardisierten Datenträgers vom Chipkarten-Typ besitzt.

3. Datenträger nach Anspruch 1 oder 2, **dadurch gekennzeichnet, daß** er aus einem Trägerteil (16) mit einer kreisringförmigen Ausnehmung (17) besteht, in die das Speicherteil (21) derart einsetzbar ist, daß sich im wesentlichen ebene Oberflächen des Datenträgers (1,1') ergeben.

4. Datenträger nach einem der Ansprüche 1 bis 3, **dadurch gekennzeichnet, daß** die Tiefe der Ausnehmung (17) des Trägerteils (16) der Dicke (18) des Speicherteils (21) entspricht.

5. Datenträger nach einem der Ansprüche 1 bis 4, **dadurch gekennzeichnet, daß** das Speicherteil (21) einen Außendurchmesser besitzt, der im wesentlichen einer Breite (3) eines standardisierten Datenträgers vom Chipkarten-Typ entspricht.

6. Datenträger nach einem der Ansprüche 1 bis 5, **dadurch gekennzeichnet, daß** er ein über Kontaktflächen auslesbares Chipelement (5) aufweist, das derart in das Trägerteil (16) einsetzbar ist, daß sich eine im wesentlichen ebene Oberfläche des Datenträgers (1,1') ergibt.

7. Datenträger nach einem der Ansprüche 1 bis 6, **dadurch gekennzeichnet, daß** die Öffnung (7) exzentrisch in dem Datenträger (1) angeordnet ist.

8. System aus einem Adapter und einem Datenträger nach einem der Ansprüche 1 bis 7, **dadurch gekennzeichnet, daß** der Adapter (8,8') eine Auslese- und/oder Einschreibevorrichtung für digitale Daten enthält und außerdem aufweist: eine etwa rechteckige Ausnehmung (12,12'), deren Innenabmessungen geringfügig größer sind, als Außenabmessungen eines von ihr aufzunehmenden plattenförmigen Datenträgers (1,1'), eine zentrale Öffnung (11), die koaxial zu einer Öffnung (7,7') des aufzunehmenden Datenträgers (1,1') ist, wobei eine aus dem Adapter (8,8') und dem Datenträger (1,1') zu bildende Einheit um eine Mittelachse (15) der Öffnungen (7,7',11) unwuchtfrei rotierbar ist, wobei die Summe der Dicke des Datenträgers (1,1') und der Dicke des Adapters (8,8') in dessen Ausnehmung (12,12') der Dicke eines standardisierten Datenträgers vom DVD-Typ entspricht.

9. System nach Anspruch 8, **dadurch gekennzeichnet, daß** der plattenförmige Datenträger (1,1') als standardisierte Chip- oder Magnetstreifenkarte in die Ausnehmung (12,12') des Adapters (8,8') einzusetzen ist.

10. System nach Anspruch 8 oder 9, **dadurch gekennzeichnet, daß** der Adapter (8,8') die Grundform eines herkömmlichen Datenträgers vom DVD-Typ besitzt.

11. System nach einem der Ansprüche 8 bis 10, **dadurch gekennzeichnet, daß** der Adapter (8,8') aus zwei Kreisscheiben (9,10) zusammengesetzt ist, von denen die eine (9) eine Dicke von praktisch 0,8 mm und die andere eine Dicke von praktisch 0,4 mm besitzt.

12. System nach Anspruch 11, **dadurch gekennzeichnet, daß** die eine Kreisscheibe (9) mit einem rechteckförmigen Ausschnitt versehen ist, der in Verbindung mit einer eine Begrenzung bildenden Stirnfläche der anderen Kreisscheibe (10) die Ausnehmung (12,12') des Adapters (8,8') bildet.

13. System nach einem der Ansprüche 8 bis 12, **dadurch gekennzeichnet, daß** eine von einer durchlässigen Schicht des Datenträgers (1,1') gebildete Oberfläche mit einer Außenfläche (14) der einen Kreisscheibe (9) des Adapters (8,8') abschließt.

14. System nach einem der Ansprüche 8 bis 10, **dadurch gekennzeichnet, daß** der Adapter (8,8') einstückig im Spritzgießverfahren hergestellt ist.

15. System nach einem der Ansprüche 8 bis 14, **dadurch gekennzeichnet, daß** die einen Datenträger (1) aufnehmende Ausnehmung (12) des Adapters (8,8') exzentrisch in Bezug auf seine zentrale Öffnung (11) angeordnet ist.

16. System nach Anspruch 15, **dadurch gekennzeichnet, daß** die zentrale Öffnung (11) des Adapters (8,8') und eine exzentrisch angeordnete Öffnung (7) eines Datenträgers (1) die gemeinsame Mittelachse (15) aufweisen, um die sich die aus dem Adapter (8) und dem Datenträger (1) gebildete Einheit unwuchtfrei rotieren läßt.

17. System nach Anspruch 15 oder 16, **dadurch gekennzeichnet, daß** die exzentrische Ausnehmung (12) des Adapters (8,8') innerhalb seines Außenumfangs angeordnet ist.

## Claims

1. A plate-shaped optical data carrier (1, 1') having a substantially rectangular shape, comprising a memory member (21) having a layer transparent for radiation and an information recording layer adjoining it, on whose surface memory areas for digital information are arranged, wherein said data carrier comprises a through opening (7, 7', 7") for a receiving means of a reading and/or writing device, **characterised in that** the thickness (4) of said data carrier is equal to the thickness of approximately 0.8 mm of a chip card or magnetic strip card and **in that** the memory member (21) has a thickness (18) of between 0.5 mm and 0.75 mm.

2. A data carrier according to Claim 1, **characterised in that** it has the length (2) and the width (3) of a standard data carrier of the chip card type.

3. A data carrier according to Claim 1 or 2, **characterised in that** it comprises a support member (16) having a circular ring-shaped recess (17) into which the memory member (21) is insertable such that substantially planar surfaces of the data carrier (1,1') result.

4. A data carrier according to one of the Claims 1 through 3, **characterised in that** the depth of the recess (17) of the support member (16) corresponds to the thickness (18) of the memory member (21).

5. A data carrier according to one of the Claims 1 through 4, **characterised in that** the memory member (21) has an outer diameter which corresponds substantially to a width (3) of a standard data carrier of the chip card type.

6. A data carrier according to one of the Claims 1 through 5, **characterised in that** it has a chip element (5) which can be read via contact surfaces and which is insertable into the support member (16) such that a substantially planar surface of the data carrier (1, 1') results.

7. A data carrier according to one of the Claims 1 through 6, **characterised in that** the opening (7) is arranged eccentrically in the data carrier (1 ).

8. A data carrier according to one of the claims 1 through 7, **characterised by** an adapter (8, 8') for a reading and/or writing device for digital data, comprising an essentially rectangular recess (12, 12') having inner dimensions that are slightly greater than the outer dimensions of a plate-shaped data carrier (1, 1') to be received therein, comprising a central opening (11 ) which is coaxial to an opening (7, 7',) of the data carrier (1, 1') to be received therein, wherein a unit to be formed of the adapter (30) and the data carrier (1, 1') can be rotated about a central axis (15) of the openings (7, 7', 11) without balance error, wherein the sum of the thickness of the data carrier (1, 1') and the thickness of the adapter (8, 8') in its recess (12, 12') corresponds to the thickness of a standard data carrier of the DVD type.

9. A data carrier according to Claim 8, **characterised in that** the plate-shaped data carrier (1, 1') to be inserted into the recess (12, 12') of the adapter (8, 8') is a standard chip card or magnetic strip card.

10. A data carrier according to Claim 8 or 9, **characterised in that** the adapter (8, 8') has the basic shape of a conventional data carrier of the DVD type.

11. A data carrier according to one of the Claims 8 through 10, **characterised in that** the adapter (8, 8') is comprised of two circular disks (9, 10) of which one (9) has a thickness of practically 0.8 mm and the other a thickness of practically 0.4 mm.

12. A data carrier according to Claim 11, **characterised in that** one of the circular disks (9) has a rectangular recess which, in connection with an end face of the other circular disk (10) forming a boundary, provides the recess (12,12') of the adapter (8, 8').

13. A data carrier according to one of the Claims 8 through 12, **characterised in that** a surface formed by a transparent layer of the data carrier (1, 1') is flush with an outer surface (14) of the one circular disk (9) of the adapter (8, 8').

14. A data carrier according to one of the Claims 8 through 10, **characterised in that** the adapter (8, 8') is manufactured as a monolithic part by an injection molding process.

15. A data carrier according to one of the Claims 8 through 14, **characterised in that** the recess (12) of the adapter (8, 8') receiving a data carrier (1) is arranged eccentrically relative to a central opening (11 ).

16. A data carrier according to Claim 15, **characterised in that** the central opening (11 ) of the adapter (8, 8') and an eccentrically arranged opening (7) of a data carrier (1 ) have the common central axis (15) about which the unit formed of the adapter (8) and the data carrier (1) can rotate without balance error.

17. A data carrier according to Claim 15 or 16, **characterised in that** the eccentric recess (12) of the adapter (8, 8') is arranged within its outer periphery.

## Revendications

1. Support de données optique en forme de plaque (1, 1') de format sensiblement rectangulaire, qui comprend un élément de mémoire (21) avec une couche qui laisse passer un rayonnement, et une couche d'enregistrement d'informations qui est disposée à la suite de celle-ci et sur la surface de laquelle sont disposées des zones de mémoire pour des informations numériques, le support de données présentant une ouverture traversante (7, 7', 7") pour un élément de réception d'un dispositif de lecture et/ou d'écriture, **caractérisé en ce que** l'épaisseur (4) du support de données est égale à l'épaisseur, d'environ 0,8 mm, d'une carte à puce ou à piste magnétique normalisée, et **en ce que** l'élément de mémoire (21) a une épaisseur (18) située entre 0,5 mm et 0,75 mm.

2. Support de données selon la revendication 1, **caractérisé en ce qu'**il a la longueur (2) et la largeur (3) d'un support de données normalisé du type carte à puce.

3. Support de données selon la revendication 1 ou 2, **caractérisé en ce qu'**il se compose d'un élément de support (16) avec un creux annulaire circulaire (17) dans lequel l'élément de mémoire (21) peut être inséré de telle sorte qu'on obtienne des surfaces sensiblement planes du support de données (1, 1').

4. Support de données selon l'une des revendications 1 à 3, **caractérisé en ce que** la profondeur du creux (17) de l'élément de support (16) correspond à l'épaisseur (18) de l'élément de mémoire (21).

5. Support de données selon l'une des revendications 1 à 4, **caractérisé en ce que** l'élément de mémoire (21) a un diamètre extérieur qui correspond sensiblement à une largeur (3) d'un support de données normalisé du type carte à puce.

6. Support de données selon l'une des revendications 1 à 5, **caractérisé en ce qu'**il présente un élément de puce (5) qui est apte à être lu par l'intermédiaire de surfaces de contact et qui peut être inséré dans l'élément de support (16) de telle sorte qu'on obtienne une surface sensiblement plane du support de données (1, 1').

7. Support de données selon l'une des revendications 1 à 6, **caractérisé en ce que** l'ouverture (7) est disposée dans le support de données (1) en étant excentrée.

8. Système formé d'un adaptateur et d'un support de données selon l'une des revendications 1 à 7, **caractérisé en ce que** l'adaptateur (8, 8') contient un dispositif de lecture et/ou d'écriture pour des données numériques et comprend en outre : un creux sensiblement rectangulaire (12, 12') dont les dimensions intérieures sont légèrement supérieures aux dimensions extérieures d'un support de données en forme de plaque (1, 1') à recevoir par ce creux, et une ouverture centrale (11) qui est coaxiale par rapport à une ouverture (7, 7') du support de données (1, 1') à recevoir, une unité à former à partir de l'adaptateur (8, 8') et du support de données (1, 1') étant apte à tourner sans déséquilibre autour d'un axe médian (15) des ouvertures (7, 7', 11), et la somme de l'épaisseur du support de données (1, 1') et de l'épaisseur de l'adaptateur (8, 8') dans le creux (12, 12') de celui-ci correspondant à l'épaisseur d'un support de données normalisé du type DVD.

9. Système selon la revendication 8, **caractérisé en ce que** le support de données en forme de plaque (1, 1') doit être inséré dans le creux (12, 12') de l'adaptateur (8, 8') sous la forme d'une carte à puce ou à piste magnétique normalisée.

10. Système selon la revendication 8 ou 9, **caractérisé en ce que** l'adaptateur (8, 8') a la forme de base d'un support de données classique du type DVD.

11. Système selon l'une des revendications 8 à 10, **caractérisé en ce que** l'adaptateur (8, 8') se compose de deux disques (9, 10), l'un (9) ayant une épaisseur de pratiquement 0,8 mm et l'autre une épaisseur de pratiquement 0,4 mm.

12. Système selon la revendication 11, **caractérisé en ce que** le disque (9) est pourvu d'une découpe rectangulaire qui, en liaison avec une surface frontale, formant une délimitation, de l'autre disque (10), forme le creux (12, 12') de l'adaptateur (8, 8').

13. Système selon l'une des revendications 8 à 12, **caractérisé en ce qu'**une surface formée par une couche transparente du support de données (1, 1') est bordée par une surface extérieure (14) d'un disque (9) de l'adaptateur (8, 8').

14. Système selon l'une des revendications 8 à 10, **caractérisé en ce que** l'adaptateur (8, 8') est fabriqué d'une seule pièce par moulage par injection.

15. Système selon l'une des revendications 8 à 14, **caractérisé en ce que** le creux (12) de l'adaptateur (8, 8') qui reçoit un support de données (1) est disposé en étant excentré par rapport à son ouverture centrale (11).

16. Système selon la revendication 15, **caractérisé en ce que** l'ouverture centrale (11) de l'adaptateur (8, 8') et une ouverture (7) d'un support de données (1) qui est excentrée contiennent l'axe médian commun (15) autour duquel l'unité formée de l'adaptateur (8) et du support de données (1) peut tourner sans déséquilibre.

17. Système selon la revendication 15 ou 16, **caractérisé en ce que** le creux excentré (12) de l'adaptateur (8, 8') est disposé à l'intérieur de la circonférence extérieure de celui-ci.
